# EUROPÄISCHE PATENTANMELDUNG

(11) **EP 2 689 656 A2**
(43) Veröffentlichungstag der Anmeldung: **29.01.2014**
(21) Anmeldenummer: 13003019.0
(22) Anmeldetag: 13.06.2013
(51) Int. Cl.: A01G 3/00

(54) **Mulchgerät**

(30) Priorität: 13.06.2012 DE 202012005722 U
(71) Anmelder: IRUS Motorgeräte GmbH, 72393 Burladingen (DE)
(72) Erfinder: Laux, Tobias, 72119 Ammerbuch (DE)
(74) Vertreter: Schwanhäußer, Gernot

(57) **Zusammenfassung**

Das Mulchgerät (10) ist insbesondere für forstwirtschaftliche Zwecke vorgesehen und dazu eingerichtet, als Anbaueinheit frontseitig an einem Trägerfahrzeug befestigt zu werden. Das Mulchgerät (10) weist einen quer zu einer Arbeitsrichtung angeordneten Rotor (12) auf, der eine Längsachse hat und an dem mehrere Mulchwerkzeuge (34; 34') starr oder beweglich befestigt sind. Ein Antrieb (14) ist dazu eingerichtet, den Rotor (12) um die Längsachse in Drehung zu versetzen. Der Rotor hat entlang der Längsachse eine Arbeitsbreite, die kleiner ist als 1 m. Auf diese Weise ist das Mulchgerät dazu geeignet, auch in sehr steilen oder sehr stark zerklüfteten Arealen eingesetzt werden zu können.

## Beschreibung

### HINTERGRUND DER ERFINDUNG

### 1. Gebiet der Erfindung

Die Erfindung betrifft ein Mulchgerät, das insbesondere für forstwirtschaftliche Zwecke vorgesehen und das dazu eingerichtet ist, als Anbaueinheit frontseitig an einem Trägerfahrzeug befestigt zu werden.

Ein derartiges Mulchgerät ist beispielsweise aus der DE 36 17 815 A1 bekannt.

### 2. Beschreibung des Standes der Technik

Mulchgeräte werden zur Zerkleinerung von Holz- und anderen Pflanzenteilen verwendet. Üblicherweise werden die zerkleinerten Teile unmittelbar dort, wo sie anfallen, auf dem Erdbogen liegen gelassen, oder teilweise in das Erdreich eingearbeitet.

Aus der oben genannten DE 36 17 815 A1 ist ein Mulchgerät bekannt, das als Anbaueinheit an der Front eines Ackerschleppers befestigt werden kann. Als Mulchwerkzeug werden bei diesem Mulchgerät rotierende Sichelmesser verwendet.

Es hat sich allerdings gezeigt, dass derart schwere und breite Mulchgeräte, die nur von Ackerschleppern und ähnlichen großen Fahrzeugen bewegt werden können, für viele Anwendungen ungeeignet sind. So sind häufig die Böschungen von Straßen- oder Bahndämmen so steil geneigt, dass hoch bauende Ackerschlepper und ähnliche Fahrzeuge wegen der Kippgefahr nicht zum Einsatz kommen können. Außerdem zerklüftet der zu erhaltende Bewuchs das Areal häufig so stark, dass die breiten Mulchgeräte nicht verwendet werden können, um schmalere Passagen zwischen dem zu erhaltenden Bewuchs von kleinerem Gestrüpp zu befreien. Ähnliche Verhältnisse finden sich teilweise auch in der Landwirtschaft, etwa im Weinbau.

### ZUSAMMENFASSUNG DER ERFINDUNG

Aufgabe der Erfindung ist es, ein Mulchgerät anzugeben, das auch für den Einsatz in steilen und/oder stark zerklüfteten Arealen eingesetzt werden kann.

Erfindungsgemäß wird diese Aufgabe durch ein Mulchgerät gelöst, das als Anbaueinheit frontseitig an einem Trägerfahrzeug befestigt werden kann. Das Mulchgerät weist einen quer zu einer Arbeitsrichtung angeordneten Rotor auf, der eine Längsachse hat und an dem mehrere Mulchwerkzeuge befestigt sind. Ein Antrieb ist dazu eingerichtet, den Rotor um die Längsachse in Drehung zu versetzen. Entlang der Längsachse hat der Rotor dabei eine Arbeitsbreite, die kleiner ist als 1 m.

Die Erfindung geht von der Überlegung aus, dass rotierende Sichelmesser, wie sie aus der eingangs genannten DE 36 17 815 A1 bekannt sind, für die Zerkleinerung von gröberem Gestrüpp im Allgemeinen nicht geeignet sind. Mulchgeräte mit Rotoren sind zwar im Stand der Technik an sich bekannt, wurden bislang aber nur mit Breiten von deutlich über einem Meter hergestellt und können deswegen nur von Großgeräten bewegt werden. Durch die erfindungsgemäße Dimensionierung eines mit einem Rotor versehenen Mulchgerätes ist es möglich, bei Rotordurchmessern zwischen 20 cm und 50 cm ein Gesamtgewicht des Mulchgeräts zwischen 150 kg und 350 kg zu erreichen. Dies ermöglicht es wiederum, das Mulchgerät an einem Trägerfahrzeug zu befestigen, das relativ klein und leistungsschwach ist und beispielsweise eine maximale Leistung zwischen 15 kW und 40 kW haben kann. Solche kleinen und schwach motorisierten Trägerfahrzeuge können ferngesteuert und insbesondere als Böschungsmäher ausgebildet sein, so dass sie auch auf sehr steilen und/oder stark zerklüfteten Arealen eingesetzt werden können. Dort wäre ansonsten eine auf dem Trägerfahrzeug mitfahrende Person erheblich gefährdet, weil das Trägerfahrzeug umkippen kann, oder weil Verletzungen durch vorspringende Äste o.ä. drohen.

Bei einem Ausführungsbeispiel sind die Mulchwerkzeuge starr an dem Rotor befestigt, wobei der Rotor eine zumindest im Wesentlichen zylindrische Umfangsfläche haben kann, an der die Mulchwerkzeuge befestigt sind.

Bevorzugt ist es dabei, wenn jedes Mulchwerkzeug einen Arbeitskopf aus gehärtetem Stahl aufweist, der in einer Halterung aufgenommen ist. Der Arbeitskopf kann dabei an einem Gewindebolzen angeformt sein, der eine Bohrung besitzt, die in der Halterung ausgebildet ist. Diese kann wiederum einen verbreiterten Fuß haben, mit dem sie mit der Umfangsfläche des Rotors verschweißt ist und der sich zur Bohrung hin verjüngt.

Bei einem anderen Ausführungsbeispiel sind die Mulchwerkzeuge beweglich an dem Rotor befestigt. Insbesondere kann der Rotor eine Anordnung paralleler Scheiben umfassen, die zwischen sich Zwischenräume festlegen. Die Mulchwerkzeuge sind dann als Schlegel ausgebildet, die frei um Drehachsen drehbar sind, die sich durch die Zwischenräume zwischen den Scheiben erstrecken. Auf diese Weise können die Schlegel durch Drehung um die Drehachse nachgeben, wenn sie während der Drehung des Rotors auf besonders schwere oder harte Gegenstände auftreffen.

Insbesondere können die Schlegel so dimensioniert sein, dass sie sich um 360° in den Zwischenräumen um die Drehachse drehen können. Auf diese Weise ist gewährleistet, dass die Schlegel sich zuverlässig wieder zurück in ihre durch die Fliehkraft einstellende Arbeitsstellung zurückbewegen, nachdem sie ausgelenkt wurden.

Als Antrieb wird im vorliegenden Zusammenhang jede Einrichtung verstanden, mit der sich der Rotor fremdkraftbetätigt in eine Drehung versetzen lässt. Im Allgemeinen wird die für die Drehung benötigte Energie dabei vom Trägerfahrzeug zugeführt, z. B. durch eine Hydraulikflüssigkeit oder eine sich drehende Frontzapfwelle. Dementsprechend kann der Antrieb als hydraulischer Antrieb oder als mechanischer Antrieb ausgebildet sein.

Das Mulchgerät kann ferner eine bewegliche Frontklappe aufweisen, die in einer Schließstellung einen Teil des Rotors überdeckt und in einer Offenstellung den Teil des Rotors freigibt. Wenn die Frontklappe in die Schließstellung überführt wird, kann bereits bearbeitetes Mulchgut besonders wirkungsvoll weiter zerkleinert werden. Die Frontklappe kann auch in Zwischenstellungen überführt werden, um auf diese Weise das Wegschleudern von zerkleinertem Gut beeinflussen zu können. Die Überführung der Frontklappe von der Schließstellung in die Offenstellung erfolgt dabei vorzugsweise motorisch.

### KURZE BESCHREIBUNG DER ZEICHNUNGEN

Weitere Vorteile und Merkmale der Erfindung ergeben sich aus der nachfolgenden Beschreibung der Ausführungsbeispiele anhand der Zeichnungen. Darin zeigen:
- Figur 1: ein erfindungsgemäßes Mulchgerät gemäß einem ersten Ausführungsbeispiel in einer perspektivischen Darstellung, wobei eine Frontklappe des Geräts sich in einer Schließstellung befindet;
- Figur 2: das in Figur 1 gezeigte Mulchgerät, jedoch mit der Frontklappe in einer Offenstellung;
- Figur 3: einen Rotor, der Teil des in den Figuren 1 und 2 gezeigten Mulchgeräts ist, in einer isolierten perspektivischen Darstellung;
- Figur 4: ein erfindungsgemäßes Mulchgerät gemäß einem zweiten Ausführungsbeispiel in einer perspektivischen Darstellung;
- Figur 5: isoliert einen Rotor, der Teil des in der Figur 4 gezeigten Mulchgeräts ist.

### BESCHREIBUNG BEVORZUGTER AUSFÜHRUNGSBEISPIELE

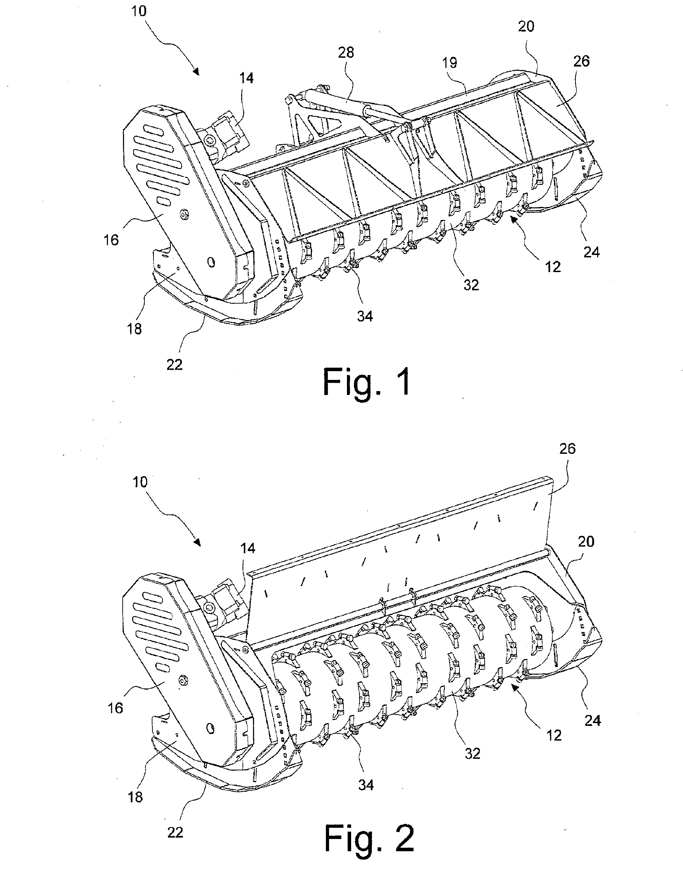

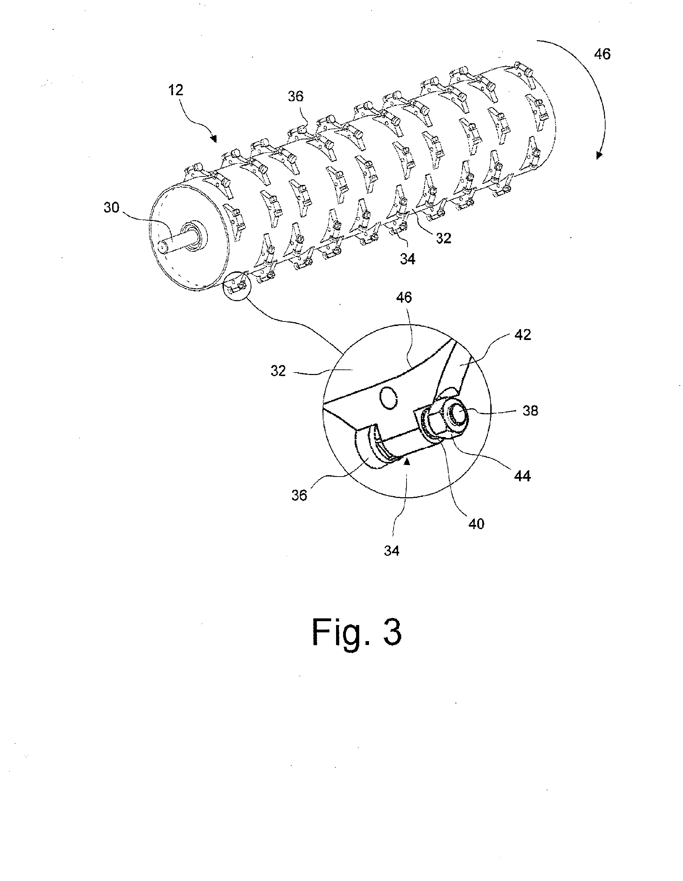

In der Figur 1 ist ein erfindungsgemäßes Mulchgerät gemäß einem ersten Ausführungsbeispiel in perspektivischer Darstellung gezeigt. Das insgesamt mit 10 bezeichnete Mulchgerät enthält als zentrale Baukomponente einen Rotor 12, der isoliert in der Figur 3 gezeigt ist und weiter unten näher beschrieben wird. Um den Rotor 12 um seine Längsachse in Drehung versetzen zu können, weist das Mulchgerät 10 einen Antrieb auf. Dieser umfasst im dargestellten Ausführungsbeispiel einen Hydraulikmotor 14 und einen Keilriemen, der den Hydraulikmotor 14 mit dem Rotor 12 verbindet. Der Keilriemen ist innerhalb eines Transmissionsgehäuses 16 angeordnet und deswegen in der Figur 1 nicht erkennbar.

Zwischen zwei Seitengehäusen 18, die an gegenüberliegenden Seiten eines Querträgers 19 angeordnet und an ihrer Unterseite mit Gleitkufen 22 bzw. 24 versehen sind, erstreckt sich eine verstellbare Frontklappe 26, die mithilfe eines Hydraulikhebels 28 von der in der Figur 1 gezeigten Schließstellung in die in der Figur 2 gezeigte Offenstellung überführt werden kann.

Im Folgenden wird Bezug auf die Figur 3 genommen, die den Rotor 12 isoliert in ebenfalls perspektivischer Darstellung zeigt. Der Rotor 12 umfasst eine Trägerwelle 30 sowie eine zylindrische Umfangsfläche 32, an der eine Vielzahl von Mulchwerkzeugen 34 starr befestigt sind. Wie der vergrößerte Ausschnitt zeigt, umfasst jedes Mulchwerkzeug 34 einen Arbeitskopf 36, der aus gehärtetem Stahl besteht. Der Arbeitskopf 36 ist an einem Ende eines Gewindebolzens 38 ausgebildet, der durch eine Bohrung 40 einer insgesamt mit 42 bezeichneten Halterung verläuft und mit einer Mutter 44 an der Halterung 42 befestigt ist. Die Halterung 42 hat einen verbreiterten Fuß 46, der sich zur Bohrung 40 hin verjüngt und an der Umfangsfläche 32 des Rotors 12 verschweißt ist.

Die Arbeitsköpfe 36 aller Mulchwerkzeuge 34 weisen in die gleiche Tangentialrichtung, so dass bei einer Drehung des Rotors 12 in der durch einen Pfeil 46 angedeuteten Drehrichtung die Arbeitsköpfe 36 das zu bearbeitende Gut zerkleinern können.

Im Betrieb des Mulchgeräts 10 wird dieses über eine nicht erkennbare Befestigungseinrichtung an der Front eines kleinen und relativ schwach motorisierten Trägerfahrzeugs befestigt. Über einen Schlauch wird der Hydraulikmotor 14 mit einem Hydraulikaggregat des Trägerfahrzeugs verbunden. Um Gestrüpp, leichte Aufwüchse, Gehölz oder Baumstumpen zu zerkleinern, wird der Rotor 12 um seine Längsachse in Drehung versetzt, und zwar entlang der mit dem Pfeil 46 erläuterten Drehrichtung. Im Allgemeinen wird bei gröberem Gestrüpp die Frontklappe 26 zunächst in die in der Figur 2 gezeigte Offenstellung überführt, damit der Zugang zum Rotor 12 nicht behindert wird. Um das so bearbeitete Gut weiter zu zerkleinern, kann die Frontklappe 26 geschlossen werden und das Mulchgerät 10 mithilfe des Trägerfahrzeugs vor- oder rückwärts bewegt werden, wobei die Drehrichtung des Rotors 12 dabei unverändert bleibt. Das zuvor bearbeitete Gut wird dann nochmals von dem Rotor 12 aufgenommen und zerkleinert. Die sich in Schließstellung befindende Frontklappe 26 gewährleistet dabei, dass das zu bearbeitende Gut wiederholt den rotierenden Arbeitsköpfen 36 ausgesetzt und dadurch nach und nach weiter zerkleinert wird. Gleichzeitig verhindert die geschlossene Frontklappe 26, dass das zerkleinerte Gut großflächig weggewirbelt wird.

Im dargestellten Ausführungsbeispiel hat das Mulchgerät 10 ein Gewicht von rund 250 kg und eine Arbeitsbreite entlang der Längsrichtung von etwa 80 cm. Der Durchmesser des Rotors 12 beträgt vorzugsweise zwischen 20 cm und 50 cm und insbesondere zwischen 25 cm und 40 cm. Infolge dieser Auslegung ist das Mulchgerät 10 dazu geeignet, auch an Trägerfahrzeugen mit kleinerer Motorisierung im Bereich von rund 15 kW bis 40 kW und vorzugsweise zwischen 18 kW und 35 kW befestigt zu werden. Bei dem Trägerfahrzeug kann es sich z. B. um einen Böschungsmäher oder um einen ferngesteuerten Geräteträger handeln. Auf diese Weise können beispielsweise auch steilere Böschungen von Bahntrassen oder Straßen von Gestrüpp und kleinerem Gehölz zu befreit werden, ohne dass die Gefahr besteht, dass Bedienpersonen durch umkippende Geräte in Gefahr geraten. Forstmulcher, die von Traktoren oder ähnlichen Großgeräten getragen werden, sind in solchem steileren und/oder zerklüfteten Gelände häufig zu sperrig und zudem kippgefährdet.

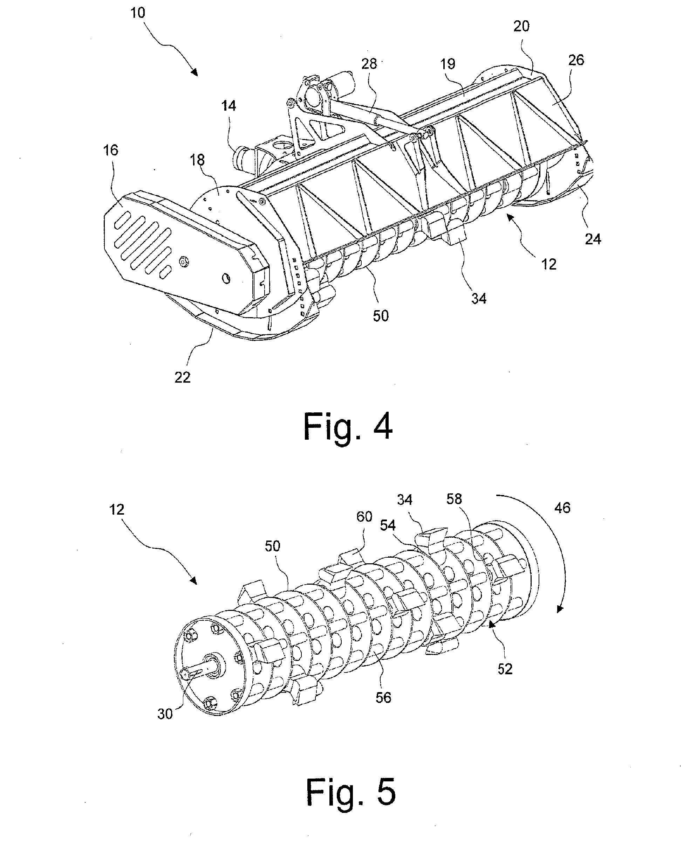

Die Figur 4 zeigt ein Mulchgerät 10 gemäß einem zweiten Ausführungsbeispiel in einer an die Figur 1 angelehnten perspektivischen Darstellung. Das in der Figur 4 gezeigte Mulchgerät 10 unterscheidet sich von dem in den Figuren 1 bis 3 gezeigten Mulchgerät insbesondere durch den Aufbau des Rotors 12, der in der Figur 5 isoliert gezeigt ist. Der Rotor 12 umfasst in diesem Ausführungsbeispiel eine Vielzahl von parallelen Scheiben 50, die zwischen sich Zwischenräume 52 festlegen. Die Mulchwerkzeuge sind hier als Schlegel 34' ausgebildet, die frei um Drehachsen 54 drehbar sind, die sich durch die Zwischenräume 52 zwischen den Scheiben 50 erstrecken. Die Drehachsen 54 sind dabei Teil von Stangen 56, die Öffnungen 58 in den Scheiben 50 durchsetzen und sich über die gesamte Breite des Rotors 12 erstrecken.

Auch die Schlegel 34' können mit Arbeitsflächen 60 aus gehärtetem Stahl versehen sein, um den hohen Belastungen während des Mulchbetriebes dauerhaft standhalten zu können.

Während der Drehung des Rotors 12 in der Drehrichtung 46 schwenken infolge der dann wirkenden Fliehkräfte die Schlegel 34' radial aus den Zwischenräumen 52 heraus und zerkleinern beim Aufprall das zu bearbeitende Gut. Bei schwerem oder besonders harten Bestandteilen des Gutes können die Schlegel 58 durch Wegschwingen um die Drehachsen 54 nachgeben, um auf diese Weise eine übermäßige Beanspruchung oder gar einen Abriss der Schlegel 34' zu verhindern.

Der Antrieb besteht bei dem in den Figuren 4 und 5 gezeigten Mulchgerät 10 aus einer Kupplungswelle 60, die während des Betriebs mit einem Wellenstutzen an einem Trägerfahrzeug befestigt wird.

## Patentansprüche

1. Mulchgerät (10), insbesondere für forstwirtschaftliche Zwecke, das dazu eingerichtet ist, als Anbaueinheit frontseitig an einem Trägerfahrzeug befestigt zu werden, mit:
a) einem quer zu einer Arbeitsrichtung angeordneten Rotor (12), der eine Längsachse hat und an dem mehrere Mulchwerkzeuge (34; 34') befestigt sind,
b) einem Antrieb (14), der dazu eingerichtet ist, den Rotor um die Längsachse in Drehung zu versetzen;
wobei der Rotor (12) entlang der Längsachse eine Arbeitsbreite hat, die kleiner ist als 1 Meter.

2. Mulchgerät nach Anspruch 1, wobei die Mulchwerkzeuge (34) starr an dem Rotor (12) befestigt sind.

3. Mulchgerät nach Anspruch 2, wobei der Rotor (12) eine zumindest im wesentlichen zylindrische Umfangsfläche (32) hat, an der die Mulchwerkzeuge (34) befestigt sind.

4. Mulchgerät nach Anspruch 3, wobei jedes Mulchwerkzeug (34) einen Arbeitskopf (36) aus gehärtetem Stahl aufweist, der in einer Halterung (42) aufgenommen ist.

5. Mulchgerät nach Anspruch 4, wobei der Arbeitskopf (36) an einen Gewindebolzen (38) angeformt ist, der eine Bohrung (40) durchsetzt, die in der Halterung (42) ausgebildet ist.

6. Mulchgerät nach Anspruch 5, wobei die Halterung (42) einen verbreiterten Fuß (46) hat, mit dem sie mit der Umfangsfläche (36) des Rotors (12) verschweißt ist und der sich zur Bohrung (40) hin verjüngt.

7. Mulchgerät nach Anspruch 1, wobei die Mulchwerkzeuge (34') beweglich an dem Rotor (12) befestigt sind.

8. Mulchgerät nach Anspruch 7, wobei der Rotor eine Anordnung paralleler Scheiben (50) umfasst, die zwischen sich Zwischenräume (52) festlegen, und wobei die Mulchwerkzeuge als Schlegel (34') ausgebildet sind, die frei um Drehachsen (54) drehbar sind, die sich durch die Zwischenräume (52) zwischen den Scheiben (50) erstrecken.

9. Mulchgerät nach Anspruch 8, wobei die Schlegel (34') so dimensioniert sind, dass sie sich um 360° in den Zwischenräumen (52) um die Drehachsen (54) drehen können.

10. Mulchgerät nach einem der vorhergehenden Ansprüche, wobei der Antrieb einen Hydraulikmotor (14) umfasst.

11. Mulchgerät nach einem der vorhergehenden Ansprüche, mit einer beweglichen Frontklappe (26), die in einer Schließstellung einen Teil des Rotors (12) überdeckt.

12. Mulchgerät nach Anspruch 12, wobei die Frontklappe (26) motorisch von der Schließstellung in eine Offenstellung überführbar ist.

13. Mulchgerät nach einem der vorhergehenden Ansprüche, wobei das Mulchgerät (10) ein Gesamtgewicht zwischen 150 kg und 300 kg hat und/oder der Durchmesser des Rotors (12) zwischen 20 cm und 50 cm beträgt.

14. Arealpflegesystem, mit einem ferngesteuerten Trägerfahrzeug, insbesondere einem Böschungsmäher, und einem frontseitig an dem Trägerfahrzeug befestigten Mulchgerät (10) nach einem der vorhergehenden Ansprüche.

15. Arealpflegesystem nach Anspruch 15, bei dem das Trägerfahrzeug eine maximale Leistung zwischen 15 kW und 40 kW hat.
